# EUROPÄISCHE PATENTSCHRIFT

(11) **EP 3 118 337 B1**
(45) Veröffentlichungstag und Bekanntmachung des Hinweises auf die Patenterteilung: **04.09.2019**
(21) Anmeldenummer: 15176767.0
(22) Anmeldetag: 15.07.2015
(51) Int. Cl.: C22B 11/02

(54) **VERFAHREN UND VORRICHTUNG ZUM ABBRAND VON EDELMETALLHALTIGEN MATERIALIEN**
METHOD AND DEVICE FOR BURNING AWAY PRECIOUS METAL-CONTAINING MATERIALS
PROCEDE ET DISPOSITIF DE COMBUSTION DE MATERIAUX CONTENANT DU METAL PRECIEUX

(43) Veröffentlichungstag der Anmeldung: 18.01.2017
(73) Patentinhaber: Heraeus Deutschland GmbH & Co. KG, 63450 Hanau (DE)
(72) Erfinder: MEYER, Horst, 63674 Altenstadt (DE); VOSS, Steffen, 63694 Limeshain (DE); ROMERO, Jose Manuel, 63457 Hanau (DE)
(74) Vertreter: Heraeus IP

(56) Entgegenhaltungen:
- WO-A2-2007/036334
- DE-A1- 2 807 402
- HOLLMANN A: "EDELMETALL-RECYCLING: VERSCHWELUNG STATT VERBRENNUNG", WASSER, LUFT UND BODEN, VEREINIGTE FACHVERLAG, MAINZ, DE, Bd. 3, 1. Januar 2000 (2000-01-01), Seiten 45-47, XP009071079, ISSN: 0938-8303

## Beschreibung

Bei einer Vielzahl von chemischen Prozessen im Multitonnenmaßstab werden heute Edelmetalle und edelmetallhaltige Spezies als Katalysatoren eingesetzt, wie z.B. beim Reforming für die Treibstoffherstellung, bei der Herstellung von Monomeren für die Polymerchemie oder bei der Herstellung von Ammoniak. Dabei gibt es prinzipiell zwei Möglichkeiten, wie das Edelmetall in dem Prozess vorliegen kann. Entweder liegt die katalytisch aktive Spezies in einer homogenen Mischung mit den Reaktanten vor oder als heterogenes Gemisch mit den Reaktanten und zumeist ist die katalytisch aktive Spezies auf einem inerten Trägermaterial abgeschieden. In vielen Fällen sind heterogene Katalysatoren bevorzugt, da sie sich auf einfache Weise, z.B. durch Filtration, aus einer Reaktionsmischung entfernen lassen. Häufig liegen in heterogenen Katalysatoren die Edelmetalle auf - zumeist inerten - makroskopischen Trägermaterialien, wie z.B. Formkörper aus Aluminiumoxid, Siliziumoxid oder Kohlenstoff, vor. Die Materialien, die für solche Formkörper verwendet werden, sind typischer Weise hochporös und ermöglichen dadurch eine gleichmäßige Verteilung des Edelmetalls auf einer großen Oberfläche. Für den Fall, dass als Trägermaterial Kohlenstoff eingesetzt wird, kann dieser z.B. aus porösem Graphit oder Aktivkohle bestehen.

Nach einer gewissen Betriebsdauer lässt die Aktivität eines edelmetallhaltigen Katalysators nach und er muss ersetzt werden. Auf Grund des hohen Edelmetallpreises ist eine Verwendung von edelmetallhaltigen Katalysatoren häufig nur wirtschaftlich, wenn das verwendete Edelmetall zurückgewonnen werden kann. Typischer Weise werden verbrauchte, heterogene Edelmetallkatalysatoren auf Basis poröser Trägermaterialien nasschemisch behandelt, um das Edelmetall herauszulösen und wiederzugewinnen. Da das nasschemische Lösen häufig in stark oxidierenden Lösungen stattfindet, stört anorganisch bzw. organisch gebundener Kohlenstoff, weil er unter anderem ein starkes Schäumen bewirken kann. Solcher anorganisch und/oder organisch gebundener Kohlenstoff kann beispielsweise aus dem Trägermaterial oder aus Prozessrückständen (z.B. Ausgangsstoffe, Produktreste, Nebenprodukte Lösungsmittel) stammen.

Dies macht Verfahren notwendig, mit denen sich anorganisch beziehungsweise organisch gebundener Kohlenstoff aus edelmetallhaltigen Zusammensetzungen entfernen lässt, damit die Edelmetalle effizient weiter aufgearbeitet werden können.

Zu diesem Zweck beschreibt die EP1951919 A1 ein zweistufiges Verfahren zum Entfernen von Kohlenstoff aus edelmetallhaltigen Materialien, bei dem zuerst unter inerter Stickstoffatmosphäre eine Pyrolyse der flüchtigen Bestandteile erfolgt und anschließend schwerbrennbares Material unter Anwesenheit von Luftsauerstoff verbrannt wird. Der Nachteil des Verfahrens besteht darin, dass für den Pyrolyseschritt Stickstoff oder ein anderes Inertgas außerhalb der Ofenkammer auf die Prozesstemperatur von ca. 800°C erhitzt werden muss und anschließend in diese eingeleitet wird. Zum einen ist die Verwendung von Inertgas vergleichsweise teuer und zum anderen bedarf das Aufheizen des Inertgases auf die Prozesstemperatur einer erheblichen Energiemenge.

A. Hollmann offenbart in "Edelmetall-Recycling: Verschwelung statt Verbrennung", Wasser, Luft und Boden, Vereinigte Fachverlag Mainz, DE, Band 3, 1. Januar 2000 eine Anlage zur Rückgewinnung von Edelmetallen aus edelmetallhaltigen Abfällen unterschiedlicher Art und Herkunft. Die Anlage enthält eine Schwel- und Oxidationskammer mit gasdicht schließender Tür.

Aufgabe der Erfindung ist es daher, ein Verfahren zum thermischen Entfernen von anorganisch und/oder organisch gebundenem Kohlenstoff aus edelmetallhaltigen Zusammensetzungen bereitzustellen, welches keine Zufuhr von vorgeheiztem Inertgas benötigt und somit kosten- und materialeffizienter betrieben werden kann als der Stand der Technik.

Die Aufgabe wird gelöst durch ein Verfahren zum Entfernen von anorganisch und/oder organisch gebundenem Kohlenstoff aus einer edelmetallhaltigen Zusammensetzung innerhalb einer Ofenkammer aufweisend mindestens einen direkten Brenner und mindestens eine Abgasleitung, umfassend die Schrittfolge:
a) Bereitstellung einer edelmetallhaltigen Zusammensetzung mit Anteilen von anorganisch und/oder organisch gebundenem Kohlenstoff innerhalb der Ofenkammer,
b) Verschließen der Ofenkammer,
c) Aufheizen des Ofenkammerinhalts unter Verwendung mindestens eines direkten Brenners zur Einstellung einer Temperatur T1 im Bereich von 450°C bis 1000°C und Halten der Temperatur T1 für 5 min - 48 h,
wobei nach dem Verschließen der Gasaustausch zwischen der Ofenkammer und der Umgebung nur über den mindestens einen direkten Brenner und die mindestens eine Abgasleitung erfolgen kann.

Die dargelegten Schritte des erfindungsgemäßen Verfahrens können direkt nacheinander ablaufen, dies ist auch bevorzugt.

Bei der edelmetallhaltigen Zusammensetzung kann es sich um jede Art von Zusammensetzung handeln, die zumindest ein Edelmetall aufweist und weiterhin Anteile von anorganisch und/oder organisch gebundenem Kohlenstoff oder Mischungen daraus umfasst. Vorzugsweise handelt es sich um verbrauchte heterogene Katalysatoren.

Dabei kann es sich bei den edelmetallhaltigen Zusammensetzungen um Feststoffe, Flüssigkeiten oder Mischungen aus Feststoffen und Flüssigkeiten handeln. Vorzugsweise können edelmetallhaltigen Zusammensetzungen mindestens eine Art aus der Gruppe bestehend aus Pulvern, Aschen, Schlämmen, Teeren, Lösungen, Dispersionen, Suspensionen, Faserstoffen, Folien, Membranen und Granulaten aufweisen.

Das mindestens eine Edelmetall kann ausgewählt sein aus der Gruppe bestehend aus Pd, Pt, Ir, Ru, Rh, Ag, und Au. Dabei kann das mindestens eine Edelmetall elementar und/oder chemisch gebunden vorliegen. Bei den Edelmetallverbindungen kann es sich beispielsweise um anorganische Verbindungen, z.B. Edelmetallsalze, Edelmetalloxide, oder um Komplexverbindungen handeln.

Der Kohlenstoff, der aus der edelmetallhaltigen Zusammensetzungen entfernt werden kann, umfasst anorganisch gebundenen Kohlenstoff, zum Beispiel in elementarer Form, wie Graphit, Aktivkohle, Ruß, Glaskohlenstoff oder amorphem Kohlenstoff, und Salze, wie zum Beispiel Carbonate oder Hydrogencarbonate. Weiterhin können durch das erfindungsgemäße Verfahren auch organische Verbindungen, d.h. organisch gebundener Kohlenstoff in Verbindung mit weiteren Elementen wie etwa H, N, P, O und S, aus edelmetallhaltigen Zusammensetzungen entfernt werden. Für den Fall, dass die edelmetallhaltige Zusammensetzung aus einer Katalyseanwendung stammt, kann Kohlenstoff entweder Teil des Katalysators oder Reaktionsrückstand gewesen sein, wie z.B. Ausgangsstoffe, Nebenprodukte oder Lösungsmittel.

Auch Hybridformen aus organisch und anorganisch gebundenem Kohlenstoff, wie z.B. Graphitoxid, können in der edelmetallhaltigen Zusammensetzung anwesend sein. Weiterhin kann die edelmetallhaltige Zusammensetzung auch anorganisch und organisch gebundenen Kohlenstoff aufweisen.

Weiterhin kann die edelmetallhaltige Zusammensetzung beispielsweise auch mindestens ein Oxid der Elemente ausgewählt aus der Gruppe bestehend aus Si, AI, Ti, Zr, Sn, Cr, Ce, B, Ca, Mg und Zn aufweisen.

Um das erfindungsgemäße Verfahren besonders energieeffizient durchführen zu können, ist es bevorzugt, die Ofenkammer möglichst kompakt auszugestalten. Demgemäß ist eine Ofenkammer von Vorteil, die ein niedriges Verhältnis von Ofenkammervolumen zu dem Volumen der edelmetallhaltigen Zusammensetzung aufweist. Bevorzug beträgt das Verhältnis von Ofenkammervolumen zu dem Volumen der edelmetallhaltigen Zusammensetzung 1 bis 50, insbesondere 2 bis 30 und ganz besonders bevorzugt 3 bis 15.

Typischer Weise kann das Verfahren in einer thermisch isolierten Ofenkammer durchgeführt werden, die für Temperaturen bis etwa 1500°C ausgelegt ist. Bei den Angaben der Temperatur handelt es sich im Rahmen dieser Erfindung durchgängig um die Atmosphärentemperatur an einem konstanten Ort innerhalb der Ofenkammer. Beispielsweise kann die Temperatur am Auslass der Abgase gemessen werden.

Die Ofenkammer kann bei Raumtemperatur mit zu behandelnder, edelmetallhaltiger Zusammensetzung beladen werden oder alternativ kann die Ofenkammer auch bei Temperaturen bis 300°C beladen werden, z.B. wenn die Ofenkammer vorher in Benutzung war. Für den Fachmann versteht es sich, dass die Ofenkammer parallel auch mit mehreren, verschieden zusammengesetzten, edelmetallhaltigen Zusammensetzungen beladen werden kann.

Der Sauerstoffgehalt der Ofenkammer entspricht beim Beladen vorzugsweise dem der Umgebungsluft.

Nach dem Beladen wird die Ofenkammer verschlossen. Durch das Verschließen der Ofenkammer wird der Ofeninnenraum so von der Umgebungsluft abgeriegelt, dass der Gasaustausch zwischen Ofeninnenraum und Umgebung nur über den mindestens einen direkten Brenner und die Abgasleitung erfolgen kann.

Wenn die Ofenkammer verschlossen ist, kann mit dem Beheizen der edelmetallhaltigen Zusammensetzung begonnen werden. Hierzu wird die Flamme mindestens eines direkten Brenners in die Ofenkammer gerichtet.

Der Brenner kann unter anderem mit Gas, wie z.B. Erdgas, oder Flüssigbrennstoffen, wie z.B. Benzin oder Heizöl, betrieben werden. Da es sich um einen direkten Brenner handelt, werden sämtliche Verbrennungsabgase des Brenners in die Ofenkammer geleitet. Im Gegensatz dazu gelangt bei indirekten Brennern nur die Wärme jedoch nicht die Abgase in die Ofenkammer. Die Verbrennungsabgase des Brenners enthalten hauptsächlich CO, CO₂, H₂O und N₂. Weiterhin können Spuren von O₂ und unverbrannten Kohlenwasserstoffen im Abgas vorliegen.
Der mindestens eine direkte Brenner ist vorzugsweise so ausgelegt, dass innerhalb von 20 min eine Temperatur T1 im Bereich von 450°C bis 1000°C in der Ofenkammer erreicht werden kann.

Während der Aufheizphase gehen gegebenenfalls vorhandene, flüchtige Kohlenstoffverbindungen in die Gasphase über und verbrennen mit dem vorhandenen Sauerstoff in der Ofenkammer. Dadurch entsteht hauptsächlich CO₂ und Wasser. Zu einem gewissen Teil kann es durch unvollständige Verbrennung auch zur Bildung von Ruß oder Kohlenmonoxid kommen. Durch die Verbrennung flüchtiger Substanzen aus der edelmetallhaltigen Zusammensetzung wird die Ofenkammer zusätzlich zu der Wärmezufuhr aus dem mindestens einen direkten Brenner aufgeheizt. Die Temperatur T1 kann so innerhalb der Ofenkammer auf 450°C - 1000°C steigen. Vorzugsweise steigt die Temperatur T1 bis zum Maximum stetig an und weist keine vorübergehenden Temperaturplateaus auf. Flüchtige organische Substanzen, die beim Aufheizen nicht vollständig verbrannt wurden, können durch die Abgasleitung entweichen. Vorzugsweise werden die Abgase der Ofenkammer einer thermischen Nachverbrennung (TNV) zugeführt. Die thermische Nachverbrennung kann z.B. aus einer weiteren Ofenkammer bestehen, in der Abgasbestandteile, die die erste Ofenkammer unvollständig oxidiert verlassen, z.B. CO, Ruß, Kohlenwasserstoffe, unter Sauerstoffüberschuss weitestgehend verbrannt werden.

Durch die stattfindende Verbrennung flüchtiger Kohlenstoffverbindungen während der Aufheizphase wird in der Ofenkammer Sauerstoff verbraucht und dadurch der Sauerstoffgehalt reduziert. Gleichzeitig steigt der Anteil an inerten Gasen wie CO₂ und Wasserdampf in der Atmosphäre der Ofenkammer an. Dadurch entsteht eine inerte Atmosphäre aus heißen Verbrennungsabgasen. Unter inerten Gasen sind im Zusammenhang mit der vorliegenden Erfindung Gase gemeint, die bei Temperaturen bis 1500°C unter Normaldruck keine Reaktion mit anorganisch und/oder organisch gebundenem Kohlenstoff eingehen. Da die heißen inerten Gase aus Verbrennungsprozessen resultieren, ist es nicht notwendig erhitztes Inertgas, wie z.B. N₂, in die Ofenkammer einzuführen.

Die Verwendung des *in situ* erzeugten Inertgases führt gegenüber extern vorgeheiztem Inertgas zu einer erheblichen Energieersparnis. Durch die Wärmezufuhr über den mindestens einen direkten Brenner und die Wärmeentwicklung bei der Verbrennung leichtflüchtiger Substanzen kann sich die Temperatur T1 in der Ofenkammer auf 450°C - 1000°C erhöhen, insbesondere auf eine Temperatur T1 im Bereich von 600°C bis 850°C. In dieser Atmosphäre aus Verbrennungsabgasen mit vermindertem Sauerstoffgehalt kann der überwiegende Teil der kohlenstoffhaltigen Materialien nicht weiter verbrennen, sondern wird pyrolysiert.

Unter Pyrolyse ist die thermisch-chemische Zersetzung von Kohlenstoffverbindungen ohne Oxidation zu verstehen. Durch die Pyrolyse werden schwerflüchtige Verbindungen ohne Oxidation zu leichtflüchtigen Verbindungen zersetzt, die bei den in der Ofenkammer vorherrschenden Temperaturen in die Gasphase übergehen können. Unter Pyrolysebedingungen kommt es nicht mehr zu einer weiteren Temperaturerhöhung durch die Reaktionswärme, da bei der Pyrolyse keine signifikanten Mengen an Wärme freigesetzt werden. Es kann sich eine konstante Temperatur T1 einstellen, die dann hauptsächlich durch die Wärmezufuhr des - vorzugsweise konstant betriebenen - mindestens einen direkten Brenners bestimmt wird. Im Zusammenhang mit der vorliegenden Erfindung wird eine Temperatur als konstant angesehen, wenn sie sich mit einer Rate von nicht mehr als ± 10°C/20 min, insbesondere nicht mehr als ±0,5°C/min ändert.

Der Vorteil einer Pyrolyse gegenüber einer thermischen Oxidation liegt in der verringerten Wärmeentwicklung. Auf diese Weise können auch flüchtige und leicht oxidierbare Substanzen sicher aus edelmetallhaltigen Zusammensetzungen entfernt werden.

Es kann vorteilhaft sein, die edelmetallhaltige Zusammensetzung mit mehreren direkten Brennern zu behandeln, um eine gleichmäßige Pyrolyse über die gesamte edelmetallhaltige Zusammensetzung zu erreichen.

Werden die mehreren direkten Brenner nacheinander betrieben, ist vorzugsweise darauf zu achten, dass sich bei der Behandlung der edelmetallhaltigen Zusammensetzung mit dem jeweiligen Brenner eine konstante Temperatur einstellt, bevor der nächste Brenner eingeschaltet wird.

Sauerstoff wird in der Pyrolysephase nicht aktiv in die verschlossene Ofenkammer geführt. Der Gasaustausch zwischen der verschlossenen Ofenkammer und der Umgebungsatmosphäre erfolgt lediglich über den mindestens einen direkten Brenner und die Abgasleitung. Bevorzugt weist die Atmosphäre in der Ofenkammer während der Pyrolyse nur 1 - 10 Vol.-% insbesondere 2 - 7 Vol.-% Sauerstoff auf.

Die Dauer der Pyrolysephase ist abhängig von den Mengen und den Eigenschaften der einzelnen Bestandteile der edelmetallhaltigen Zusammensetzung und kann im Bereich von 5 min bis 48 Stunden liegen. Vorzugsweise dauert die Pyrolysephase 15 min - 8 Stunden, insbesondere 30 min - 2 Stunden.

Für den Fall, dass an die Ofenkammer der vorliegenden Erfindung eine thermische Nachverbrennung angeschlossen ist, kann das Ende der Pyrolyse über einen Temperaturrückgang in der TNV detektiert werden. Wenn die Pyrolyse in der Ofenkammer keine flüchtigen Verbindungen mehr freisetzt, die die Ofenkammer unverbrannt verlassen, sinkt die Temperatur in der TNV, da weniger brennbares Material im Abgas vorhanden ist. Alternativ kann die Pyrolyse auch über Temperatur- oder Gassensoren in der Ofenkammer überwacht werden. Durch die selbstinertisierende Wirkung der Verfahrensschritte a) - c) ist es möglich edelmetallhaltige Zusammensetzungen einfach und sicher von leichtbrennbaren Substanzen zu befreien.

Für den Fall, dass die edelmetallhaltige Zusammensetzung Anteile anorganisch und/oder organisch gebundenen Kohlenstoffs enthält, die während der Pyrolysephase nicht entfernt werden können, folgt optional auf Schritt c) ein Schritt d), bei dem ein Inertgas/Sauerstoff - Gemisch mit einem Sauerstoffgehalt von 15 - 35 Volumenprozent in die Ofenkammer zur Einstellung einer Temperatur T2 im Bereich von 500°C bis 1100°C eingeleitet und die Temperatur T2 für 5 min - 48 h gehalten wird. Sauerstoff und Inertgas können entweder getrennt oder als Gemisch in die Ofenkammer eingebracht werden. Bei dem Inertgas kann es sich beispielsweise um Stickstoff, Edelgase oder CO₂ handeln. Vorzugsweise wird Umgebungsluft mit einem Sauerstoffgehalt von ca. 21 Vol.-% und ca. 78 Vol.-% Stickstoff in die Ofenkammer eingeleitet. Während des Einleitens eines Inertgas/Sauerstoff-Gemischs kann mindestens ein direkter Brenner aktiv sein.

Durch die Erhöhung des Sauerstoffgehalts in der Atmosphäre der Ofenkammer können nun auch schwer oxidierbare Substanzen verbrannt werden. Die Menge an eingeleitetem Sauerstoff wird vorzugsweise so eingestellt, dass die Temperatur T2 einen konstanten Wert innerhalb des Bereichs von 500°C bis 1100°C annimmt. Bevorzugt nimmt T2 einen Wert im Bereich von 550°C bis 850°C an.

Während Schritt d) kann Kohlenstoff in der edelmetallhaltigen Zusammensetzung effizient und gefahrlos durch Verbrennung entfernt werden. Durch die zuvor erfolgte Pyrolyse kann weitestgehend vermieden werden, dass es während der Verbrennung zur unkontrollierten Freisetzung von leichtflüchtigen Substanzen kommt. Dadurch können schwer brennbare Verbindungen ohne Verpuffungen oder Explosion verbrannt werden.

Vorzugsweise befindet sich der Atmosphärendruck innerhalb der Ofenkammer während der Pyrolyse und der oxidativen Verbrennung im Bereich von 0,1 bis 250 mbar unter dem Druck, der außerhalb der Ofenkammer herrscht. Besonders bevorzugt weist der Innendruck in der Ofenkammer einen Wert im Bereich von 150 - 200 mbar unter dem Druck außerhalb der Ofenkammer auf. Erreicht werden kann der Unterdruck in der Ofenkammer beispielsweise durch einen Kamineffekt oder dadurch, dass in der Abgasleitung der Ofenkammer eine Vorrichtung angebracht ist, welche aktiv Abgas aus der Ofenkammer entfernt. Die Vorrichtung kann zum Beispiel ein Gebläse oder ein Ventilator sein.

### Beispiel:

349,6 kg eines palladiumhaltigen Katalysatorrückstands (Pd auf Al₂O₃) aus einer organischen Synthese mit einem Palladiumgehalt von 5 Gew.-% wurden gleichmäßig auf 16 Wannen verteilt. Die Wannen wurden in Gestelle geladen und in eine Ofenkammer mit direktem Brenner und angeschlossener thermischer Nachverbrennung (TNV) gestellt. Während des Beladens hatte die Ofenkammer eine Temperatur von etwa 200°C aus dem vorangegangenen Prozess. Der Sauerstoffgehalt entsprach dem der Umgebungsluft. Anschließend wurde die Ofenkammer verschlossen und die thermische Nachverbrennung wurde gezündet. Als die TNV die Betriebstemperatur (ca. 900°C) erreicht hatte, wurde der erste direkte Brenner gezündet. Nach 60 min erreichte die Ofentemperatur einen konstanten Wert von 816°C. Die Temperatur in der TNV betrug zu dem Zeitpunkt 1110°C. Der Anstieg der Temperatur in der TNV zeigte an, dass brennbare Substanzen aus der Ofenkammer in die Abgasleitung gelangt waren. Anschließend wurde die Temperatur für weitere 20 Minuten beibehalten.

Um den Gehalt an Kohlenstoff in der edelmetallhaltigen Zusammensetzung möglichst weit zu reduzieren wurde ein zweiter Brenner gezündet, der auf andere Bereiche der Gestelle mit den Wannen gerichtet war als der erste Brenner. Der erste Brenner wurde anschließend abgeschaltet.

Nach etwa 30 Minuten stellte sich eine konstante Temperatur von 610°C ein, die für weitere 20 Minuten gehalten wurde. Die Temperatur in der TNV betrug zu dem Zeitpunkt 1100°C. Der abgesunkene Wert von 610°C in der Ofenkammer zeigte an, dass die Wärmeentwicklung durch oxidative Verbrennung in der Ofenkammer nachgelassen hatte. Der konstant hohe Wert von 1100°C in der TNV zeigte an, dass aus der Ofenkammer oxidativ verbrennbare Substanzen als Abgase entwichen waren.

Anschließend wurde ein dritter direkter Brenner gezündet, der auf Bereiche des Gestells gerichtet war, die von dem ersten und zweiten Brenner bis zu dem Zeitpunkt nicht ausreichend erhitzt wurden.

Nach 30 Minuten stellte sich eine konstante Temperatur von 620°C ein. Die Temperatur in der TNV lag zu dem Zeitpunkt bei 990°C. Die Temperatur in der Ofenkammer wurde für weitere zwei Stunden auf 620°C gehalten. Dabei stellte sich in der TNV wieder der Ausgangswert von 900°C ein.

Der Temperaturabfall um mehr als 200°C in der TNV auf den Ausgangswert zeigte an, dass der Pyrolyseprozess in der Ofenkammer abgeschlossen war.

Anschließend wurde eine Öffnung in der Ofenkammer betätig, die es erlaubte mit einem Gebläse Luft in die Ofenkammer zu leiten. Durch den erhöhten Sauerstoffgehalt in der Ofenatmosphäre verbrannte auch kohlenstoffhaltiges Material, welches vorher nicht aus der edelmetallhaltigen Zusammensetzung entfernt wurde. Durch das Einblasen von Umgebungsluft in die Ofenkammer stieg die Temperatur wieder auf 800°C an und erreichte anschließend einen konstanten Wert bei 600°C. Die mittlere Temperatur in der TNV blieb während der oxidativen Verbrennung unverändert.

Anschließend wurde der dritte Brenner abgeschaltet und der Rückstand in den Wannen abgekühlt.

Der Rückstand nach dem Abkühlen wurde zu 57,320 kg bestimmt. Der LOI (loss on ignition) der erhaltenen Asche wurde im Labor bestimmt. Dazu wurden 40 g des abgekühlten Rückstands im Mörser zerrieben und für 3 Stunden bei 600°C direkt mit einer Bunsenbrennerflamme behandelt. Der Gewichtsverlust nach dem Brennen betrug 4,5 Gew.-%. Unter der Annahme, dass lediglich kohlenstoffhaltige Substanzen zu der Gewichtsminderung um 4,5% beitragen, ließ sich ableiten, dass der Restgehalt an anorganischem und/oder organischem Kohlenstoff nach der Durchführung des erfindungsgemäßen Verfahrens maximal 4.5 Gew.-% betrug.

Materialien, die einen LOI von weniger als 10% aufweisen sind geeignet für eine nasschemische Aufarbeitung, bei der die einzelnen Edelmetalle getrennt und gereinigt werden können.

## Patentansprüche

1. Verfahren zum Entfernen von anorganisch und/oder organisch gebundenem Kohlenstoff aus einer edelmetallhaltigen Zusammensetzung innerhalb einer Ofenkammer aufweisend mindestens einen direkten Brenner und mindestens eine Abgasleitung,
umfassend die Schrittfolge:
a) Bereitstellung einer edelmetallhaltigen Zusammensetzung mit Anteilen von anorganisch und/oder organisch gebundenem Kohlenstoff innerhalb der Ofenkammer,
b) Verschließen der Ofenkammer,
c) Aufheizen des Ofenkammerinhalts unter Verwendung mindestens eines direkten Brenners zur Einstellung einer Temperatur T1 im Bereich von 450°C bis 1000°C und Halten der Temperatur T1 für 5 min - 48 h,
wobei nach dem Verschließen der Gasaustausch zwischen der Ofenkammer und der Umgebung nur über den mindestens einen direkten Brenner und die mindestens eine Abgasleitung erfolgen kann.

2. Verfahren nach Anspruch 1,
**dadurch gekennzeichnet,**
**dass** die Temperatur T1 konstant ist.

3. Verfahren nach Anspruch 1 oder 2,
**gekennzeichnet durch** den nach c) folgenden Schritt
d) Einleiten eines Inertgas/Sauerstoff -Gemischs mit einem Sauerstoffgehalt von 15 - 35 Volumenprozent in die Ofenkammer zur Einstellung einer Temperatur T2 im Bereich von 500°C bis 1100°C und Halten der Temperatur T2 für 5 min - 48 h.

4. Verfahren nach einem der Ansprüche 1 - 3,
**dadurch gekennzeichnet,**
**dass** die Temperatur T1 in Schritt c) im Bereich von 600°C bis 850°C liegt.

5. Verfahren nach einem der Ansprüche 1 - 4,
**dadurch gekennzeichnet,**
**dass** die edelmetallhaltige Zusammensetzung mindestens ein Edelmetall aus der Gruppe bestehend aus Pd, Pt, Ir, Ru, Rh, Ag, und Au aufweist.

6. Verfahren nach einem der Ansprüche 1 bis 5,
**dadurch gekennzeichnet,**
**dass** die edelmetallhaltige Zusammensetzung als Flüssigkeit, als Feststoff oder als Mischung aus Flüssigkeit und Feststoff vorliegt.

7. Verfahren nach einem der Ansprüche 1 -6,
**dadurch gekennzeichnet,**
**dass** die edelmetallhaltige Zusammensetzung mindestens eine Art aus der Gruppe bestehend aus Pulvern, Aschen, Schlämmen, Teeren, Lösungen, Dispersionen, Suspensionen, Faserstoffen, Folien, Membranen und Granulaten aufweist.

8. Verfahren nach einem der Ansprüche 3 - 7,
**dadurch gekennzeichnet,**
**dass** das Inertgas Stickstoff ist.

9. Verfahren nach einem der Ansprüche 1 - 8,
**dadurch gekennzeichnet,**
**dass** der Druck in der Ofenkammer nach Schritt b) im Bereich von 0,1 bis 250 mbar unter dem außerhalb der Ofenkammer herrschenden Umgebungsdruck liegt.

10. Verfahren nach einem der Ansprüche 1 - 9,
**dadurch gekennzeichnet,**
**dass** die edelmetallhaltige Zusammensetzung einen Edelmetallgehalt von 0,1 bis 90 Gew.-% aufweist.

## Claims

1. A method for removing inorganically and/or organically bound carbon from a precious metal-containing composition inside an oven chamber having at least one direct burner and at least one flue gas conduit, comprising the sequence of steps:
a) providing a precious metal-containing composition comprising fractions of inorganically and/or organically bound carbon inside the oven chamber,
b) closing the oven chamber,
b) heating the oven chamber content by using at least one direct burner for setting a temperature T1 in the range of between 450°C and 1000°C and holding the temperature T1 for 5 min - 48 h,
whereby, after the closing, the gas exchange between the oven chamber and the surroundings can only take place via the at least one direct burner and the at least one flue gas conduit.

2. The method according to claim 1,
**characterised in that** the temperature T1 is constant.

3. The method according to claim 1 or 2,
**characterised by** the step following after c)
d) introducing an inert gas/oxygen mixture with an oxygen content of 15-35 percent by volume into the oven chamber for setting a temperature T2 in the range of between 500°C and 1100°C and holding the temperature T2 for 5 min - 48 h.

4. The method according to any one of claims 1-3,
**characterised in that** the temperature T1 in step c) lies in the range of between 600°C and 850°C.

5. The method according to any one of claims 1-4,
**characterised in that** the precious metal-containing composition has at least one precious metal from the group consisting of Pd, Pt, Ir, Ru, Rh, Ag, and Au.

6. The method according to any one of claims 1 to 5,
**characterised in that** the precious metal-containing composition is present as liquid, as solid, or as mixture of liquid and solid.

7. The method according to any one of claims 1-6,
**characterised in that** the precious metal-containing composition has at least one type from the group consisting of powders, ashes, slurries, tars, solutions, dispersions, suspensions, fibrous materials, films, membranes and granulates.

8. The method according to any one of claims 3-7,
**characterised in that** the inert gas is nitrogen.

9. The method according to any one of claims 1-8,
**characterised in that** the pressure in the oven chamber after step b) lies in the range of between 0.1 and 250 mbar below the ambient pressure prevailing outside of the oven chamber.

10. The method according to any one of claims 1-9,
**characterised in that** the precious metal-containing composition has a precious metal content of between 0.1 and 90% by weight.

## Revendications

1. Procédé d'élimination de carbone fixé de manière inorganique et/ou organique d'une composition contenant du métal noble au sein d'une chambre de four présentant au moins un brûleur direct et au moins une conduite de gaz d'échappement,
comprenant la succession d'étapes :
a) mise à disposition d'une composition contenant du métal noble avec des proportions de carbone fixé de manière inorganique et/ou organique au sein de la chambre de four,
b) fermeture de la chambre de four,
c) chauffage du contenu de chambre de four en utilisant au moins un brûleur direct pour le réglage d'une température T1 dans la région de 450°C à 1000°C et le maintien de la température T1 pendant 5 min à 48h,
dans lequel l'échange gazeux entre la chambre de four et l'environnement ne peut s'effectuer après la fermeture que par le biais de l'au moins un brûleur direct et l'au moins une conduite de gaz d'échappement.

2. Procédé selon la revendication 1,
**caractérisé en ce**
**que** la température T1 est constante.

3. Procédé selon la revendication 1 ou 2,
**caractérisé par** l'étape succédant à c)
d) introduction d'un mélange de gaz inerte/oxygène avec une teneur en oxygène de 15 à 35 pourcent volumique dans la chambre de four pour le réglage d'une température T2 dans la région de 500°C à 1100°C et le maintien de la température T2 pendant 5 min à 48h.

4. Procédé selon une des revendications 1 à 3,
**caractérisé en ce**
**que** la température T1 se situe à l'étape c) dans la région de 600°C à 850°C.

5. Procédé selon une des revendications 1 à 4,
**caractérisé en ce**
**que** la composition contenant du métal noble présente au moins un métal noble parmi le groupe constitué de Pd, Pt, Ir, Ru, Rh, Ag et Au.

6. Procédé selon une des revendications 1 à 5,
**caractérisé en ce**
**que** la composition contenant du métal noble est présente en tant que liquide, en tant que solide ou en tant que mélange de liquide et solide.

7. Procédé selon une des revendications 1 à 6,
**caractérisé en ce**
**que** la composition contenant du métal noble présente au moins un type parmi le groupe constitué de poudres, cendres, boues, goudrons, solutions, dispersions, suspensions, substances fibreuses, films, membranes et granulés.

8. Procédé selon une des revendications 3 à 7,
**caractérisé en ce**
**que** le gaz inerte est l'azote.

9. Procédé selon une des revendications 1 à 8,
**caractérisé en ce**
**que** la pression dans la chambre de four après l'étape b) se situe dans la région de 0,1 à 250 mbar en dessous de la pression environnante régnant en dehors de la chambre de four.

10. Procédé selon une des revendications 1 à 9,
**caractérisé en ce**
**que** la composition contenant du métal noble présente une teneur en métal noble de 0,1 à 90 % en poids.
